Europäisches Patentamt

European Patent Office

Office européen des brevets

(11) Veröffentlichungsnummer: **0 297 480 B1**

# EUROPÄISCHE PATENTSCHRIFT

(45) Veröffentlichungstag der Patentschrift: **25.11.92**

(21) Anmeldenummer: **88110209.9**

(22) Anmeldetag: **27.06.88**

(51) Int. Cl.⁵: **G06F 13/36**

(54) **Verfahren und Anordnung zur Regelung der Belastung eines Datenleitungssystems für Ein-/Ausgabeeinheiten einer Datenverarbeitungsanlage.**

(30) Priorität: **30.06.87 DE 3721602**

(43) Veröffentlichungstag der Anmeldung:
**04.01.89 Patentblatt 89/01**

(45) Bekanntmachung des Hinweises auf die
Patenterteilung:
**25.11.92 Patentblatt 92/48**

(84) Benannte Vertragsstaaten:
**AT BE CH DE FR GB IT LI NL SE**

(56) Entgegenhaltungen:
**EP-A- 0 156 989**
**EP-A- 0 170 994**

**IBM TECHNICAL DISCLOSURE BULLETIN,
Band 24, Nr. 1B, Juni 1981, Seite 608, New
York, US; G.R. ALSPAUGH et al.:
"Data-dependent channel-access method"**

**PATENT ABSTRACTS OF JAPAN, Band 10,
Nr. 316 (P-510)[2372], 28. Oktober 1986, Seite
46 P 510 & JP-A-61 125 662**

(73) Patentinhaber: **Siemens Nixdorf Informationssysteme AG
Otto-Hahn-Ring 6
W-8000 München 83(DE)**

(72) Erfinder: **Backhaus, Werner Dipl.-Phys.
Aidenbachstrasse 96
W-8000 München 70(DE)**
Erfinder: **Dietl, Erich Dipl.-Ing.
Am Graspoint 24
W-8200 Rosenheim(DE)**

(74) Vertreter: **Fuchs, Franz-Josef, Dr.-Ing. et al
Postfach 22 13 17
W-8000 München 22(DE)**

EP 0 297 480 B1

## Beschreibung

Die Erfindung betrifft ein Verfahren und eine Anordnung zur Regelung der Belastung eines Datenleitungssystems für Ein-/Ausgabeeinheiten einer Datenverarbeitungsanlage entsprechend dem Überbegriff des Patentanspruches 1 bzw. 4.

Die Kosten für ein Datenleitungssystem werden im wesentlichen durch die von diesem zu erbringende Übertragungsleistung bestimmt. Es ist dabei unwirtschaftlich, die Übertragungsleistung entsprechend der möglichen und meist nur kurzzeitig auftretenden Spitzenbelastung festzulegen. Man begnügt sich in der Regel vielmehr mit einer unterhalb der Spitzenbelastung liegenden geringeren Übertragungsleistung und nimmt in Kauf, daß eine eingeleitete Datenübertragung wegen Überschreitung der Belastungsgrenze abgebrochen und wiederholt werden muß.

Handelt es sich um ein Datenleitungssystem für eine Vielzahl von Ein-/Ausgabeeinheiten eines Ein-/Ausgabesystems einer Datenverarbeitungsanlage, dann kann die Überschreitung der Belastungsgrenze zu einer Beeinträchtigung der laufenden Datenübertragungen von bzw. zu allen das Datenleitungssystem gemeinsam nutzenden Ein-/Ausgabeeinheiten und damit zu einer Abschaltung des Systems mit nachfolgendem Wiederanlauf führen, was einen erheblichen Zeitverzug mit sich bringt und die Leistungsfähigkeit des Systems weiter beeinträchtigt.

Durch die Druckschrift JP-A-61 125 662 ist bereits eine Lösung dieses Problems bekannt. Danach werden alle von der Befehlssteuerung der CPU ausgehenden Anforderungen für die Einleitung einer von einer an das Datenleitungssystem angeschlossenen Ein/Ausgabeeinheiten auszuführenden Datenübertragung von einer zentralen Steuereinheit des Datenleitungssystems überwacht, und anhand einer gesonderten Laststeuerung wird festgestellt, ob die Anforderung noch zugelassen werden kann. Zu diesem Zweck wird mit der Anforderung die jeweils zu übertragende Datenmenge und die Identität der betroffenen Ein-/Ausgabeeinheit übertragen. Aus der in einem Speicher enthaltenen zugehörigen Lastrate der betroffenen Ein-/Ausgabeeinheit wird dann die durch die angeforderte Datenübertragung ausgelöste individuelle Belastung für das Datenleitungssystem ermittelt und gespeichert sowie zur Summe der durch andere Anforderungen ausgelösten Belastungen addiert. Übersteigt der neue Summenwert einen für das Datenleitungssystem vorgegebenen maximalen Belastungswert, dann wird die Anforderung nicht zugelassen und der Übergang in einen Wartezustand veranlaßt. Gleichzeitig wird der Gesamtbelastungswert wieder um den gespeicherten individuellen Belastungswert verringert. Wird der Maximalwert der Belastung dagegen nicht erreicht, dann wird die Anforderung und damit die Datenübertragung zugelassen, und am Ende derselben wird dann der Maximalwert um den gespeicherten individuellen Belastungswert wieder verringert.

Die Erfindung bezweckt eine Verbesserung dieses Verfahrens und eine entsprechend arbeitende Schaltungsanordnung in der Weise, daß das Datenleitungssystem optimaler für Datenübertragungen bei geringerem Aufwand für die Laststeuerung genutzt werden kann.

Dieses wird hinsichtlich des Verfahrens gemäß der Erfindung durch die kennzeichnenden Merkmale des Patentanspruches 1 erreicht.

Danach werden die von den Ein/Ausgabeeinheiten ausgehenden Anforderungen zur Lastregelung genutzt, die nur gestellt werden, wenn die Ein-/Ausgabeeinheiten für den Empfang bzw. für die Anwendung von Daten bereit sind. Gegenüber der Orientierung an den CPU-Anforderungen führt das zu einer besseren Nutzung des Datenleitungssystems, da keine Verlustzeiten bis zur Reaktion der jeweils angesprochenen Ein-/Ausgabeeinheiten auftreten, die die Übertragungsleistung des Datenleitunssystems erheblich beeinträchtigen. Da außerdem am Ausgangspunkt der Anforderungen die Art der angeschlossenen Geräte bekannt ist, kann in einfacher Weise mit jeder Anforderung die zugehörige Lastinformation bereitgestellt werden. Eine gesonderte Ermittlung der jeweils zu übertragenden Datenmenge und der daraus resultierende Belastung sowie die Speicherung aller Datenraten und der jeweils individuellen Lasten in der Laststeuerung entfallen damit. Der nur portionsweise erfolgenden Übertragung größerer Datenmengen mit wiederholten Anforderungen je Datenportion wird dadurch Rechnung getragen, daß nur die jeweils mit der ersten Anforderung einer Folge übertragene Lastinformation berücksichtigt wird. Andererseits wird das bei Überschreiten der zugelassenen Lastgrenze ausgelöste Sperrsignal allen Ein-/Ausgabeeinheiten zugeleitet, so daß Anforderungen zur Einleitung neuer, das Datenleitungssystem zusätzlich belastender Datenübertragungen an Ort und Stelle unterbunden werden, während andere das Datenleitungssystem nicht weiter belastende Anforderungen, z.B. Folgeanforderungen, Endmeldungen und dergleichen, weiterhin abgesetzt werden können. Unnötige, das Datenleitungssystem belastende Anforderungswiederholungen werden so in einfacher Weise vermieden. Auch entfällt wegen der Sperrung nur der nachfolgenden Anforderungen, nicht aber einer bereits entgegengenommenen Anforderung das Rückgängigmachen der bereits erhöhten Lastsumme.

Dabei ist es besonders vorteilhaft, wenn die Lastinformation jeweils ein Vielfaches einer Lasteinheit und die Belastungsrichtung angibt, da dann die zentrale Steuereinheit das Ende einer Datenübertragung nicht gesondert zu überwachen braucht. Außerdem ermöglicht ein wahlweise einstellbarer Schwellwert zur Auslösung des Sperrsignales in einfacher Weise eine Anpassung an die im Betrieb sich einstellende optimale Belastungsschwelle.

Eine entsprechende Anordnung gemäß der Erfindung ergibt sich aus den Merkmalen des Patentanspruches 4. Der Aufwand hierfür ist verhältnismäßig gering. Er besteht in der Kopplung der Laststeuerung mit der Anforderungssteuerung für die Ein-/Ausgabeeinheiten und aus einer gesonderten Steuerleitung für das Datenleitungssystem zur Erzeugung des Sperrsignales sowie aus Einrichtungen in den einzelnen an das Datenleitungssystem angeschlossenen Ein-/Ausgabeeinheiten zur Auswertung des Sperrsignals und zur Sperrung vorliegender Anforderungen.

Für die Ableitung des Sperrsignales durch die Laststeuerung kann gemäß der Weiterbildung entsprechend Patentanspruch 5 ein einfaches Schieberegister vorgesehen werden, bei dem bei zunehmender Belastung eine dem jeweiligen Vielfachen der Lasteinheiten entsprechende zusätzliche Anzahl von Registerstufen mit dem Wert "1" belegt wird, während bei einer Entlastung eine entsprechende Anzahl von vorher mit dem Wert "1" belegten Registerstufen mit dem Wert "0" belegt wird, was durch einfache Schiebevorgänge gesteuert werden kann. Erreicht dabei die Belegung mit dem Wert "1" eine vorgegebene Registerstufe, dann wird das Sperrsignal ausgelöst.

Anstelle einer Schieberegistersteuerung kann gemäß Anspruch 6 auch eine binäre Addier/Subtrahierschaltung in Verbindung mit einem Ergebnisregister verwendet werden.

Einzelheiten der Erfindung seien nachfolgend anhand eines in der Zeichnung dargestellten Ausführungsbeispieles näher erläutert.

Im einzelnen zeigen

FIG 1 ein Blockschaltbild einer Datenverarbeitungsanlage mit an ein gemeinsames Datenleitungssystem angeschlossenen Ein-/Ausgabeeinheiten eines Ein-/Ausgabesystems,

FIG 2 ein Blockschaltbild zur Erläuterung der Zusammenarbeit zwischen einer Ein-/Ausgabeeinheit und der zentralen Steuereinheit für das Datenleitungssystem,

FIG 3 ein Impulsdiagramm für die zugehörigen Steuersignale des Datenleitungssystems,

FIG 4 eine Darstellung des mit jeder Anforderung an die zentrale Steuereinheit gelieferten Parameterwortes mit der Lastinformation und

FIG 5 eine Schaltungsanordnung zur Erzeugung des Sperrsignals gemäß der Erfindung abhängig von der übergebenen Lastinformation.

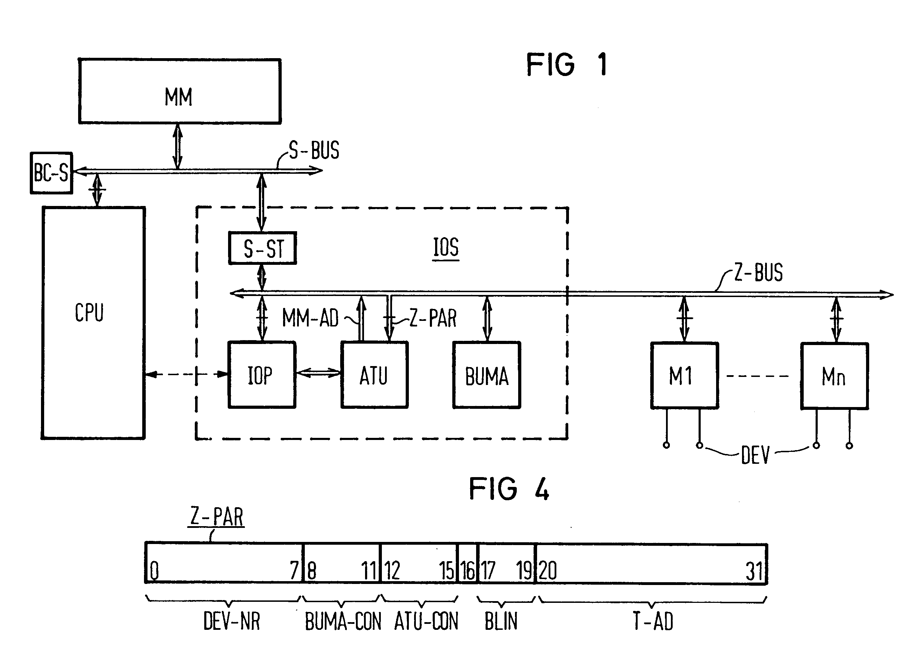

Die in FiG 1 gezeigte Datenverarbeitungsanlage besteht in herkömmlicher Weise aus einem Hauptspeicher MM mit Zugriffssteuerung, zum Beispiel ein Speicherleitungssystem S-BUS mit Zuteilungssteuerung BC-S, an die über Schnittstellensteuerungen S-ST ein Zentralprozessor CPU und ein Ein-/Ausgabesystem IOS angeschlossen ist. Letzteres besteht entsprechend der EP-A1-0156989 aus einem Ein-/Ausgabeprozessor IOP und einem Datenleitungssystem Z-BUS mit einer Reihe von selbständigen Ein-/Ausgabeeinheiten M1 bis Mn zur Ansteuerung peripherer Geräte DEV.

Das Datenleitungssystem Z-BUS wird durch eine zentrale Steuereinheit BUMA überwacht und gesteuert, die im vorliegenden Falle in das Ein-/Ausgabesystem IOS einbezogen ist, und es hat über das Speicherleitungssystem S-BUS direkten Zugriff zum Hauptspeicher MM. Die Ein-/Ausgabeeinheiten M1 bis Mn führen übertragene Ein-/Ausgabeaufträge weitgehend selbständig aus. Lediglich für die Einleitung und den Abschluß solcher Aufträge treten die Ein-/Ausgabeeinheiten M1 bis Mn mit dem unterstützenden Ein-/Ausgabeprozessor IOP in Verbindung, während vor allem während eines Ein-/Ausgabeauftrages notwendig werdende Datentransfers zwischen den peripheren Geräten DEV und dem Hauptspeicher MM einschließlich Befehlskettung, Datenkettung und Erzeugung der Abschlußinformationen von den Ein-/Ausgabeeinheiten M1 bis Mn selbsttätig abgewickelt werden.

Die für die direkte Ansteuerung des Arbeitsspeichers MM durch die Ein-/Ausgabeeinheiten M1 bis Mn benötigten Speicheradressen MM-AD werden jeweils von einer als zusätzliche Einheit an das Datenleitungssystem Z-BUS angeschlossenen Adressensteuereinheit ATU geliefert, deren Aufbau und Arbeitsweise in der genannten EP-A1-o156989 beschrieben ist, worauf hier aber im Zusammenhang mit der vorliegenden Erfindung nicht näher eingegangen zu werden braucht.

Anforderungen der Ein-/Ausgabeeinheiten M1 bis Mn für einen Datenverkehr über das gemeinsame Datenleitungssystem Z-BUS werden jeweils an die gemeinsame Steuereinheit BUMA gerichtet, die dann den Übertragungsweg zwischen der jeweils sendenden und empfangenden Einheit nach Annahme der Anforderung frei gibt.

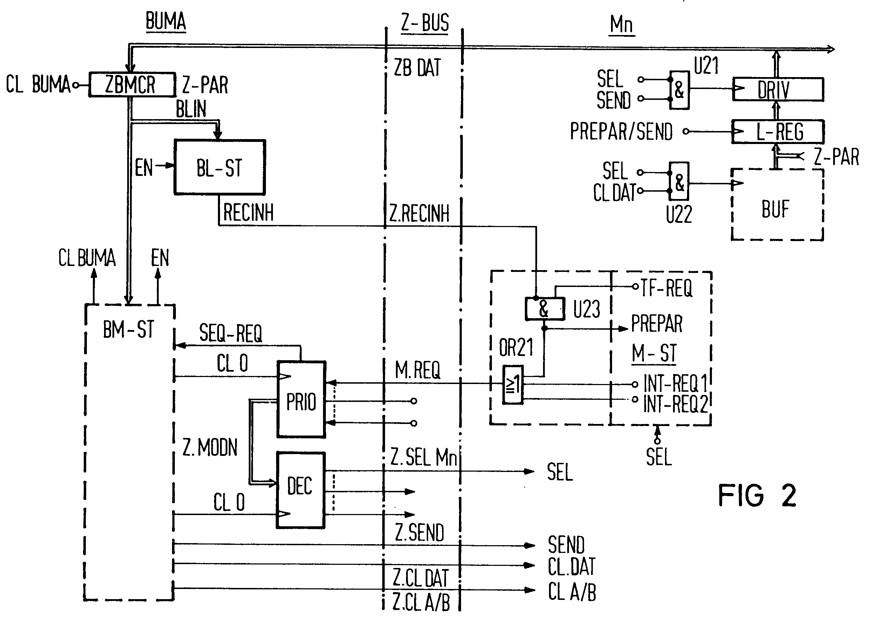

FIG 2 zeigt Teile dieser zentralen Steuereinheit BUMA und einer Ein-/Ausgabeeinheit Mn mit den für die Erläuterung der Erfindung notwendigen Steuer- und Datenleitungen des Datenleitungssystems Z-BUS, um Anforderungen auswählen und abwickeln zu können.

Die zentrale Steuereinheit BUMA ist zu diesem Zweck mit jeder Ein-/Ausgabeeinheit, zum Beispiel Mn, am Datenleitungssystem Z-BUS mit einer Anforderungsleitung M.REQ verbunden, die von einer Prioritätssteuereinrichtung PRIO überwacht wird. Zu vorgegebenen Zeitpunkten, die durch das Taktsignal CL.0 bestimmt sind, wird die Nummer Z.MODN der jeweils die höchste Priorität aufweisenden anfordernden Einheit ermittelt und über den Decoder DEC die zugehörige individuelle Auswahlleitung Z.SELMn aktiviert. Die zusätzliche gemeinsame Signalleitung Z.SEND gibt im Zusammenwirken mit der Auswahlleitung Z.SELM... die ausgewählte anfordernde Einheit zum Senden frei, wobei Taktimpulse CL.DAT auf der weiteren gemeinsamen Taktsignalleitung Z.CLDAT die Übernahme des auf den gemeinsamen Datenleitungen ZB.DAT jeweils anstehenden Datenwortes in der jeweils empfangenden Einheit bewirken und bei mehreren nacheinander zu übertragenden Datenwörtern in der sendenden Einheit die Bereitstellung des jeweils nächsten Datenwortes steuert.

Zu diesem Zweck wirken die Signale SEL und SEND in jeder Ein-/Ausgabeeinheit M... über ein UND-Glied U21 zusammen, um die Ausgangstreiber DRIV für die Datenleitungen ZB.DAT zu aktivieren, die über ein vorgeschaltetes Register L-REG mit dem jeweils zu sendenden Datenwort gespeist werden. Dieses Register wird unter anderem vom Signal SEND getaktet. Andererseits wirken die Signale SEL und CL.DAT über ein UND-Glied U22 auf die Steuerschaltung beispielsweise eines Pufferspeichers BUF ein, um das jeweils nachfolgende Datenwort für die Übernahme in das Register L-REG bereitzustellen, wenn mehr als ein Datenwort in Folge gesendet werden soll.

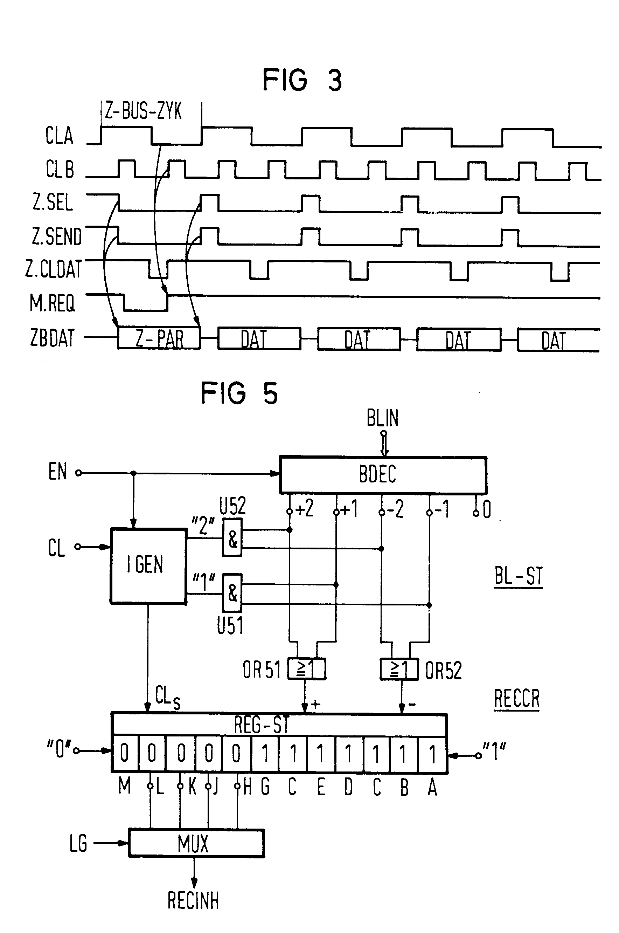

FIG 3 zeigt ein entsprechendes Impulsdiagramm der benötigten Signale, wenn nach Stellung einer Anforderung mehrere Datenwörter im Rahmen einer zugeteilten, eine vorgegebene Anzahl von Übertragungszyklen Z-BUS-ZYK umfassenden Übertragungssequenz von der anfordernden Ein-/Ausgabeeinheit Mn aus übertragen werden soll. Alle Steuersignale werden von zwei Grundtakten CLA und CLB abgeleitet, wobei die Periode des Grundtaktes CLA die einzelnen Übertragungszyklen Z-BUS-ZYK für je ein Datenwort auf den Datenleitungen ZB.DAT festlegt. Beide Grundtakte CLA und CLB stehen außerdem über gesonderte Steuerleitungen des Datenleitungssystems Z-BUS allen angeschlossenen Ein-/Ausgabeeinheiten M1 bis Mn ebenfalls zur Verfügung.

In jedem Übertragungszyklus Z-BUS-ZYK werden mit der Vorderflanke der Taktimpulse CLB in Koinzidenz mit einem Taktimpuls CLA je ein negativer Impuls SEL und SEND gebildet, der mit der Vorderflanke des jeweils nachfolgenden Taktimpulses CLA wieder beendet wird. Weiterhin wird in jedem Übertragungszyklus ein negativer Taktimpuls CL.DAT ausgelöst, der mit der Rückflanke jedes Taktimpulses CLA beginnt und mit der Vorderflanke des jeweils nachfolgenden Taktimpulses CLB wieder endet. Die Koinzidenz der negativen Signalimpulse SEL und SEND bestimmt dabei, wie bereits im Zusammenhang mit FIG 2 erwähnt, das Wirksamsein der einzelnen Datenwörter auf den Datenleitungen ZB.DAT, während mit dem positiven Zwischenimpuls des Signales SEND die Bereitstellung des jeweils nachfolgenden Datenwortes für die Aussendung erfolgen kann, das im Vorlauf durch die Koinzidenz der negativen Signalimpulse SEL und CLDAT bereits ausgewählt ist. Außerdem wird in der zweiten Hälfte des jeweils ersten Übertragungszyklus einer Übertragungssequenz die angenommene Anforderung REQ mit der Vorderflanke des Taktimpulses CLB zurückgesetzt.

Die Anzahl der je Übertragungssequenz jeweils benötigten Übertragungszyklen Z-BUS-ZYK ist von dem mit jedem jeweils ersten Übertragungszyklus auf den Datenleitungen ZB.DAT übertragenen Parameterwort Z-PAR abhängig, dessen Aufbau FIG 4 zeigt. Dieses Parameterwort enthält neben der Nummer des Gerätes DEV, das über die anfordernde Ein-/Ausgabeeinheit M... die Anforderung ausgelöst hat, und weiteren hier nicht interessierenden Informationen eine Steuerinformation BUMA-CONT für die zentrale Steuereinheit BUMA, die den weiteren Steuerungsablauf für das Datenleitungssystem Z-BUS und damit die Anzahl der restlichen Übertragungszyklen der begonnenen Übertragungssequenz festlegt, und eine Lastinformation BLIN, die aus den drei Bits 17 bis 19 besteht und codiert zum Beispiel folgende Hinweise beinhaltet:

000 - Last bleibt unverändert: ± 0
100 - Lastverminderung um eine Einheit: - 1
101 - Lastverminderung um zwei Einheiten: - 2
110 - Lasterhöhung um eine Einheit: + 1
111 - Lasterhöhung um zwei Einheiten: + 2

wobei zum Beispiel eine Lasteinheit gleich zwei MByte/sec ist.

Diese Lastinformation BLIN wird in der zentralen Steuereinheit BUMA (FIG 2) von der Laststeuerung BL-ST jeweils ausgewertet und gegebenenfalls das Sperrsignal RECINH erzeugt, das über die Steuersignalleitung Z.RECINH des Datenleitungssystems Z-BUS allen angeschlossenen Ein-/Ausgabeeinheiten M... zugeleitet wird.

Innerhalb der Steuerung M-ST einer Ein-/Ausgabeeinheit entstehende Anforderungen TF-REQ für eine Datenübertragung werden dann abhängig vom Signal RECINH am UND-Glied U23 gesperrt oder über die Anforderungsleitung M.REQ zur zentralen Steuereinheit BUMA weitergeleitet, wobei gleichzeitig mit dem Wirksamwerden des Anforderungssignals der Steuerung M-ST durch das Signal PREPAR eine Aufforderung zur Bereitstellung des Parameterwortes Z-PAR signalisiert wird.

Andere innerhalb der Steuerung M-ST einer Ein-/Ausgabeeinheit entstehende Anforderungen, zum Beispiel INT-REQ1 und INT-REQ2, die das Datenleitungssystem Z-BUS nicht weiter belasten, da beispielsweise nur eine Abschlußinformation abzusetzen ist, können dagegen ohne die Behinderung durch das Signal RECINH abgesetzt werden, wobei alle Anforderungssignale über das ODER-Glied OR21 zusammengefaßt werden.

Damit ergibt sich für die Anordnung von FIG 2 insgesamt folgende Arbeitsweise für die Überwachung und Entgegennahme von Anforderungen der Ein-/Ausgabeeinheiten M1 bis Mn am Datenleitungssystem Z-BUS:

Die interne Steuerung BM-ST der zentralen Steuereinheit BUMA überwacht hardware- oder mikroprogrammgesteuert zu vorgegebenen Zeitpunkten, die dem Takt CL0 entsprechen, mit der Prioritätssteuerung PRIO die einzelnen Anforderungsleitungen M.REQ auf anstehende Anforderungen. Liegt eine Anforderung vor, wird mit dem Ergebnissignal SEQ-REQ der Start einer Übertragungssequenz für die identifizierte Ein-/Ausgabeeinheit Mn bei der internen Steuerung BM-ST angefordert, die dann einen ersten Übertragungszyklus Z-BUS-ZYK einleitet und die Signale SEL, SEND und CLDAT erzeugt. Mit den Signalen SEND und SEL wird das vorab mit dem Signal PREPAR bereits im Senderegister L-REG bereitgestellte Parameterwort Z-PAR auf die Datenleitungen ZB.DAT geschaltet und mit einem vom Signal CLDAT in der zentralen Steuereinheit BUMA abgeleiteten Signal CLBUMA in das Register ZBMCR übernommen, an die interne Steuerung BM-ST weitergeleitet und ausgewertet. Abhängig von dieser Auswertung werden dann weitere Übertragungszyklen Z-BUS-ZYK wirksam geschaltet, um zum Beispiel entsprechend FIG 3 die Übertragung weiterer Datenwörter zu veranlassen, wobei die Empfängereinheit, zum Beispiel die Schnittstellensteuerung S-ST zum Arbeitsspeicher MM, durch eine nicht gezeigte zugehörige Auswahlleitung in Verbindung mit den Taktimpulsen CLDAT zur Übernahme der Datenwörter freigegeben wird. Gegen Ende der auf diese Weise nach fest vorgegebenem Schema ablaufenden Übertragungssequenz wird dann wieder überprüft, ob eine neue Anforderung vorliegt und so weiter.

Einzelheiten der Laststeuerung BL-ST von FIG 2 zeigt FIG 5. Wesentlicher Bestandteil dieser Schaltungsanordnung ist ein Schieberegister RECCR mit den Registerstufen A bis M und einer Registersteuerung REG-ST für Verschiebungen in beiden Richtungen abhängig von zugeführten Schiebetaktimpulsen $CL_S$ und den Richtungssignalen " + " und "-".

Bei Vorliegen des Richtungssignals " + " entsprechend einer zunehmenden Belastung wird mit jedem Schiebeimpuls $CL_S$ der Wert "1" in das Schieberegister RECCR übernommen, so daß nach und nach immer mehr Registerstufen mit diesem Wert belegt werden, während bei Vorliegen des Richtungssignals "-" in umgekehrter Richtung mit jedem Schiebeimpuls $CL_S$ der Wert "0" übernommen und damit die Anzahl der mit dem Wert "1" belegten Registerstufen wieder verringert wird. Der Ausgang einer vorgegebenen Registerstufe, zum Beispiel K, zeigt daher bei erstmaliger Belegung mit dem Wert "1" in einfacher Weise das Erreichen einer vorgegebenen Belastung an, die beispielsweise bei einer Lasteinheit von 2 MByte/sec je Schiebeimpuls $CL_S$ der Belastung von insgesamt 20 MByte/sec entspricht.

Durch einen an die Ausgänge von mehreren Registerstufen, zum Beispiel H bis L, angeschalteten Auswahlschalter MUX läßt sich mit einer Einstellinformation LG für die jeweilige Lastgrenze die Auslösung des Sperrsignals RECINH variabel einstellbar gestalten, so daß eine Anpassung an die im tatsächlichen Betrieb sich ergebende optimale Belastungsschwelle ohne weiteres möglich ist.

Die Richtungssignale " + " und "-" sowie die jeweils erforderliche Anzahl von Schiebeimpulsen $CL_S$ werden jeweils aus der bereitgestellten Lastinformation BLIN mittels des Decoders BDEC abgeleitet, wenn dieser mit dem Signal EN freigegeben wird. Die Richtungssignale können dann unmittelbar durch ODER-Glieder OR51 und OR52 von den Ausgängen des Decoders BDEC abgeleitet werden, während durch UND-Glieder U51 und U52 ein Impulsgenerator IGEN zur Erzeugung der benötigten Schiebeimpulse $CL_S$ voreingestellt wird, die beispielsweise von einem zur Verfügung stehenden Grundtakt CL abgeleitet werden.

Anstelle der gezeigten Ausführungsform für die Laststeuerung BL-ST mit einem Schieberegister ist auch eine mit einer binären Addier-/Subtrahierschaltung und einem nachgeschalteten Ergebnisregister möglich, wobei das Ergebnisregister jeweils die Summe aller Lastinformationen angibt. Zur Erzeugung des Sperrsignals RECINH kann dann ein mit dem Ausgang des Ergebnisregisters gekoppelter Decoder, der die Registerstufen des Schieberegisters RECCR in FIG 5 nachbildet, oder unmittelbar der Ausgang einer Zählstelle des Summenregisters verwendet werden.

**Patentansprüche**

1. Verfahren zur Regelung der Belastung eines Datenleitungssystems (Z-BUS) für die Übertragung von Daten zwischen jeweils einer von mehreren an das Datenleitungssystem angeschlossenen Ein-/Ausgabeeinheiten (M1 bis Mn) und einer der mit diesem Datenleitungssystem in Verbindung stehenden zentralen Einheiten (IOP, MM) einer Datenverarbeitungsanlage, wobei eine zentrale Steuereinheit (BUMA) des Datenleitungssystems (E-BUS) das Vorliegen von Anforderungen zur Datenübertragung überwacht und die Freigabe des Datenleitungssystems für die gewünschte Datenübertragung in der einen oder anderen Richtung steuert, indem eine mit einer Anforderung jeweils übertragene Lastinformation (BLIN) über die mit der gewünschten Datenübertragung verbundene Belastung des Datenleitungssystems von der zentralen Steuereinheit ausgewertet, die sich aus den einzelnen Anforderungen ergebenden Belastungen summiert und der Summenwert mit einem für das Datenleitungssystem vorgegebenen maximalen Belastungswert verglichen wird, wobei gewünschte Datenübertragungen bei Überschreiten des maximalen Belastungswertes unterbunden werden, während nach Beendigung einer jeden zugelassenen Datenübertragung der Summenwert um die damit verbundene Belastung wieder verringert wird,

**dadurch gekennzeichnet,**

- daß zur Regelung der Belastung in der zentralen Steuereinheit (BUMA) des Datenleitungssystems (Z-BUS) nur die direkten Übertragungsanforderungen der Ein-/Ausgabeeinheiten berücksichtigt werden, wobei mit jeder Anforderung die Übertragung nur einer vorgegebenen maximalen Anzahl, z.B. 8 oder 32 Byte, von Dateneinheiten verbunden ist, so daß bei der Übertragung größerer zusammenhängender Datenmengen, z.B. 2 kByte, die Anforderung nacheinander entsprechend oft zu wiederholen ist,

- daß bei einer mehrere aufeinanderfolgende Anforderungen durch eine der Ein-/Ausgabeeinheiten (z.B. Mn) mit sich bringenden Datenübertragung einer zusammenhängenden Datenmenge nur die in Verbindung mit der jeweils ersten Anforderung einer Folge übertragene Lastinformation (BLIN) berücksichtigt wird,

- daß bei Überschreiten eines vorgegebenen Schwellwertes für die unmittelbar summierten Lastinformationen (BLIN) ein Sperrsignal (RECINH) erzeugt wird, das als zusätzliches Steuersignal (Z.RECINH) des Datenleitungssystems (Z-BUS) alle angeschlossenen Ein-/Ausgabeeinheiten (M1 bis Mn) daran hindert, nachfolgend Anforderungen (TF-REQ) für das Datenleitungssystem (Z-BUS) zusätzlich belastende Datenübertragungen zu stellen, und

- daß in Verbindung mit jeder eine Datenübertragung abschliessenden letzten Anforderung eine die mit der zugehörigen ersten Anforderung übergebene Lastinformation (BLIN) kompensierende Lastinformation übergeben wird, die die summierten Lastinformationen entsprechend mindert.

2. Verfahren nach Anspruch 1, **dadurch gekennzeichnet,** daß die Lastinformation (BLIN) jeweils ein Vielfaches einer Lasteinheit (zum Beispiel 2 MByte/sec) und die Belastungsrichtung (" + " oder "-") angibt.

3. Verfahren nach Anspruch 1 oder 2, **dadurch gekennzeichnet,** daß der Schwellwert für die Auslösung des Sperrsignals (RECINH) wahlweise einstellbar ist.

4. Schaltungsanordnung zur Regelung der Belastung eines Datenleitungssystems (Z-BUS) für die Übertragung von Daten zwischen jeweils einer von mehreren an das Datenleitungssystem angeschlossenen Ein-/Ausgabeeinheiten (M1 bis Mn) und einer der mit diesem Datenleitungssystem in Verbindung stehenden zentralen Einheiten (IOP, MM) einer Datenverarbeitungsanlage, wobei eine zentrale Steuereinheit (BUMA) des Datenleitungssystems (E-BUS) das Vorliegen von Anforderungen zur Datenübertragung überwacht und die Freigabe des Datenleitungssystems für die gewünschte Datenübertragung in der einen oder anderen Richtung steuert, und wobei eine in der zentralen Steuereinheit vorgesehene gesonderte Laststeuerung (BL-ST) die mit einer Anforderung übertragene Lastinformation (BLIN) über die mit der gewünschten Datenübertragung verbundene Belastung des Datenleitungssystems auswertet, indem sie die sich aus den einzelnen Anforderungen ergebenden Belastungen summiert, den jeweiligen Summenwert mit einem für das Datenleitungssystem vorgegebenen maximalen Belastungswert vergleicht und bei Überschreiten des maximalen Belastungswertes ein Sperrsignal zur Unterbindung gewünschter Datenübertragungen erzeugt, während nach Beendigung einer jeden zugelassenen Datenübertragung der Summenwert um die damit verbundene Belastung wieder verringert wird,

**dadurch gekennzeichnet,**

- daß die Laststeuerung (BL-ST) in der zentralen Steuereinheit (BUMA) nur bei Anforderungen durch die Ein-/Ausgabeeinheiten (z.B. Mn) wirksam schaltbar ist (mit Signal EN),

- daß der das Sperrsignal liefernde Signalausgang der Laststeuerung (RECINH) mit einer gesonderten zu allen Ein-/Ausgabeeinheiten (MI bis Mn) führenden gesonderten Steuerleitung (Z.RECINH) des Datenleitungssystems verbunden ist, und

- daß in jeder an das Datenleitungssystem (Z-BUS) angeschlossenen Ein-/Ausgabeeinheit (M1 bis Mn) Einrichtungen zur Auswertung des Sperrsignals auf der gesonderten Steuerleitung (Z.RECINH) und zur Sperrung örtlich erzeugter Anforderungen (TF-REQ) für das Datenleitungssystem zusätzlich belastende Datenübertragungen vorgesehen sind.

5. Schaltungsanordnung nach Anspruch 4, **dadurch gekennzeichnet,** daß die Laststeuerung (BL-ST) ein Schieberegister (RECCR) mit einer vorgegebenen Anzahl von Registerstufen (A bis M), dessen Dateneingang für die eine Schieberichtung mit dem Wert "1" und dessen Dateneingang für die andere Schieberichtung mit dem Wert "0" beschaltet ist, und eine Schieberegistersteuerung (BDEC, IGEN, U51, U52, OR51, OR52) aufweist, die aus der jeweils zugeführten Lastinformation (BLIN) die zugehörige Anzahl von Schiebeimpulsen ($CL_S$) und das jeweilige Richtungssignal ("+" oder "-") ableitet, und daß eine dem vorgebenen Schwellwert entsprechende Registerstufe (zum Beispiel K), einen gesonderten Signalausgang aufweist, der abhängig vom Inhalt dieser Registerstufe (K) das Sperrsignal (RECINH) liefert.

6. Schaltungsanordnung nach Anspruch 4, **dadurch gekennzeichnet,** daß die Laststeuerung (BL-ST) eine binäre Addier-/Subtrahierschaltung und ein Summenregister aufweist, dessen Ausgang auf den einen Eingang der Addier-/Subtrahierschaltung rückgekoppelt ist, während dem anderen Eingang die aus der jeweiligen Lastinformation (BLIN) abgeleitete Anzahl von Lasteinheiten zusammen mit einem die Änderungsrichtung anzeigenden Signal zugeführt wird, und daß eine dem vorgegebenen Schwellwert entsprechende Registerstelle des Summenregisters einen gesonderten Signalausgang aufweist, der abhängig vom Inhalt dieser Registerstelle das Sperrsignal (RECINH) liefert.

7. Schaltungsanordnung nach einem der Ansprüche 5 oder 6, **dadurch gekennzeichnet,** daß mit den Ausgängen mehrerer benachbarter Registerstufen (zum Beispiel H bis L) ein Auswahlschalter (MUX) gekoppelt ist, durch den einer der Ausgänge (zum Beispiel K) abhängig von einer vorgegebenen Lastgrenze (LG) zur Bildung des Sperrsignals (RECINH) auswählbar ist.

**Claims**

1. Method for regulating the load of a data line system (Z-BUS) for the transfer of data between in each case one of a plurality of input/output devices (M1 to Mn) connected to the data line system and one of the central units (IOP, MM) of a data processing system connected to said data line system, in which a central control unit (BUMA) of the data line system (E-BUS) monitors the presence of requests for data transfer and controls the release of the data line system for the desired data transfer in the one or other direction, in that load information (BLIN) transferred with a request in each case and relating to the load on the data line system in connection with the desired data transfer is evaluated by the central control unit, which totals the loading resulting from the individual requests and compares the totalled value with a maximum load value predetermined for the data line system, desired data transfers being blocked if the maximum load value is exceeded, while the totalled value is reduced again by the concomitant load after completion of each permitted data transfer, characterised in that,

- for regulating the load in the central control unit (BUMA) of the data line system (Z-BUS), only the direct transfer requests of the input/output devices are taken into account, there being associated with each request the transfer of only a predetermined maximum number, for example 8 or 32 bytes, of data units, so that in the case where larger volumes of contiguous data, for example 2 kbyte, are to be transferred, the request must be repeated correspondingly often in succession,

- in that in the case of data transfer of a contiguous volume of data involving a plurality of successive requests by one of the input/output devices (for example Mn), only the transferred load information (BLIN) associated with the respective first request of a sequence is taken into account,

- in that, if a predetermined threshold value for the directly totalled load information (BLIN) is exceeded, an inhibit signal (RECINH) is generated which, as an additional control signal (Z.RECINH) of the data line system (Z-BUS), prevents all connected input/output devices (M1 to Mn) from subsequently issuing requests (TF-REQ) for data transfers placing an additional load on the data line system (Z-BUS),

- and in that, in connection with each final request terminating a data transfer, load information compensating for the load information (BLIN) transferred with the associated first request is transferred, which reduces the totalled load information correspondingly.

2. Method according to Claim 1, characterised in that the load information (BLIN) specifies in each case a multiple of a load unit (for example 2 Mbyte/sec) and the load direction (" + " or "-").

3. Method according to Claim 1 or 2, characterised in that the threshold value for triggering the inhibit signal (RECINH) can be set optionally.

4. Circuit arrangement for regulating the load of a data line system (Z-BUS) for the transfer of data between in each case one of a plurality of input/output devices (M1 to Mn) connected to the data line system and one of the central units (IOP, MM) of a data processing system connected to said data line system, in which a central control unit (BUMA) of the data line system (E-BUS) monitors the presence of requests for data transfer and controls the release of the data line system for the desired data transfer in the one or other direction, and in which a separate load controller (BL-ST) provided in the central control unit evaluates the load information (BLIN) transferred with a request and relating to the loading of the data line system in connection with the desired data transfer, in that it totals the loading resulting from the individual requests, compares the respective totalled value with a maximum load value predetermined for the data line system, and generates an inhibit signal for blocking desired data transfers if the maximum load value is exceeded, while the totalled value is reduced again by the concomitant load after completion of each permitted data transfer, characterised in that

- the load controller (BL-ST) in the central control unit (BUMA) can only be activated (with signal EN) by requests from the input/output devices (for example Mn),

- in that the signal output of the load controller (RECINH) supplying the inhibit signal is connected to a separate special control line (Z.RECINH) of the data line system leading to all input/output devices (M1 to Mn),

- and in that there are provided in each input/output device (M1 to Mn) connected to the data line system (Z-BUS) means for evaluating the inhibit signal on the separate control line (Z.RECINH) and for inhibiting locally generated requests (TF-REQ) for data transfers placing an additional load on the data line system.

5. Circuit arrangement according to Claim 4, characterised in that the load controller (BL-ST) has a shift register (RECCR) with a predetermined number of register stages (A to M), the value "1" being applied to the data input of which for the one shift direction and the value "0" being applied to the data input of which for the other shift direction, and a shift register controller (BDEC, IGEN, U51, U52, OR51, OR52) which derives the associated number of shift pulses ($CL_S$) and the respective direction signal (" + " or "-") from the load information (BLIN) supplied in each case, and in that a register stage (for example K) corresponding to the predetermined threshold value has a separate signal output which supplies the inhibit signal (RECINH) depending on the contents of said register stage (K).

6. Circuit arrangement according to Claim 4, characterised in that the load controller (BL-ST) has a binary addition/subtraction circuit and a sum register, the output of which is fed back to one input of the addition/subtraction circuit, while the other input is supplied with the number of load units derived from the respective load information (BLIN) together with a signal indicating the direction of change, and in that a register location of the sum register corresponding to the predetermined threshold value has a separate signal output which supplies the inhibit signal (RECINH) depending on the contents of said register location.

7. Circuit arrangement according to one of Claims 5 or 6, characterised in that there is coupled to the outputs of a plurality of adjacent register stages (for example H to L) a selection switch (MUX) by means of which one of the outputs (for example K) can be selected for forming the inhibit signal (RECINH) depending on a predetermined load limit (LG).

**Revendications**

1. Procédé pour régler la charge d'un système de lignes de transmission de données (Z-BUS) pour la transmission de données entre respectivement l'une parmi plusieurs unités d'entrée/sortie (M1 à Mn), raccordées au système de lignes de transmission de données, et l'une des unités centrales (IOP,MM) d'une installation de traitement de données, qui sont raccordées à ce système de lignes de transmission de données, et selon lequel une unité centrale de commande (BUMA) du système de lignes de transmission de données (E-BUS) contrôle la présence de demandes pour la transmission de données et commande la libération du système de lignes de transmission de données pour la transmission de données désirée dans un sens ou dans l'autre, en exploitant une information de charge (BLIN), qui est respectivement transmise avec une demande et qui concerne la charge du système de lignes de transmission de données, liée à la transmission désirée de données, par l'unité centrale de commande, qui additionne des charges résultant des différentes demandes, la valeur somme étant comparée à une valeur de charge maximale prédéterminée pour le système de lignes de transmission de données, et selon lequel des transmissions désirées de données sont interrompues lors du dépassement de la valeur de charge maximale, tandis qu'à la fin de chaque transmission autorisée de données, la valeur somme est à nouveau réduite de la charge qui y est liée, caractérisé par le fait

   - que, pour la régulation de la charge dans l'unité centrale de commande (BUMA) du système de lignes de transmission de données (Z-BUS), seules les demandes directes de transmission des unités d'entrée/sortie sont prises en compte, la transmission de seulement un nombre maximum prédéterminé, par exemple 8 ou 32 octets, d'unités de données étant associée à chaque demande, de sorte que lors de la transmission de quantités de données consécutives assez grandes, par exemple 2 k.octets, la demande doit être répétée successivement avec un nombre de fois adéquat,
   - que, dans le cas d'une transmission d'une quantité de données successives, qui implique à plusieurs demandes successives de l'une des unités d'entrée/sortie (par exemple Mn), seule l'information de charge (BLIN) transmise en liaison avec la première demande respective d'une suite est prise en compte,

   - que lors du dépassement d'une valeur de seuil prédéterminée pour les informations de charge (BLIN) directement additionnées, il est produit un signal de blocage (RECINH), qui, en tant que signal de commande supplémentaire (Z.RECINH) du système de lignes de transmission de données (Z-BUS), empêche toutes les unités raccordées d'entrée/sortie (M1 à Mn) de présenter ensuite des demandes (TF-REQ) pour des transmissions de données qui chargent de façon supplémentaire le système de lignes de transmission de données (Z-BUS), et
   - qu'en liaison avec chaque dernière demande terminant une transmission de données, est transférée une information de charge, qui compense l'information de charge (BLIN) transmise avec la première demande associée et qui réduit de façon correspondante les informations de charge additionnées.

2. Procédé suivant la revendication 1, caractérisé par le fait que l'information de charge (BLIN) indique respectivement un multiple d'une unité de charge (par exemple 2 M.octets/s) et indique la direction de charge (" + " ou "-").

3. Procédé suivant la revendication 1 ou 2, caractérisé par le fait que la valeur de seuil pour le déclenchement du signal d blocage (RECINH) est réglable à volonté.

4. Montage pour régler la charge d'un système de lignes de transmission de données (Z-BUS) pour la transmission de données entre respectivement l'une parmi plusieurs unités d'entrée/sortie (M1 à Mn), raccordées au système de lignes de transmission de données, et l'une des unités centrales (IOP,MM) d'une installation de traitement de données, qui sont raccordées à ce système de lignes de transmission de données, et dans lequel une unité centrale de commande (BUMA) du système de lignes de transmission de données (E-BUS) contrôle la présence de demandes pour la transmission de données et commande la libération du système de lignes de transmission de données pour la transmission de données désirée dans un sens ou dans l'autre, et dans lequel une unité particulière de charge (BL-ST) prévue dans l'unité centrale de commande exploite l'information de charge (BLIN), qui est respectivement transmise avec une demande et qui concerne la charge du système de lignes de transmission de données, liée à la transmission désirée de données, par le fait que l'unité centrale additionne des charges résultant des différentes demandes, compare la valeur somme à une valeur de charge maximale prédéterminée pour le système de lignes de transmission de données, et, lors du dépassement de la valeur de charge maximale, produit un signal de blocage pour interrompre des transmissions désirées de données, tandis qu'à la fin de chaque transmission autorisée de données, la valeur somme est à nouveau réduite de la charge qui y est liée, caractérisé par le fait

- que l'unité de commanda de charge (BL-ST) située dans l'unité de commande centrale (BUMA) ne peut être réactivée que dans le cas de demandes des unités d'entrée/sortie (par exemple Mn) (par un signal EN),

- que la sortie, qui donne le signal de blocage, de l'unité de commande de charge (RECINH) est raccordée à une ligne de commande particulière (Z.RECINH) du système de lignes de transmission de données, qui aboutit à toutes les unités d'entrée/sortie (M1 à Mn), et

- que dans chaque unité d'entrée/sortie (M1 à Mn) raccordée au système de lignes de transmission de données (Z-BUS), il est prévu des dispositifs pour exploiter le signal de blocage présent dans la ligne particulière de commande (Z.RECINH) et pour réaliser le blocage de demandes (TF-REQ) produites localement, de transmissions de données qui chargent en supplément le système de lignes de transmission de données.

5. Montage suivant la revendication 4, caractérisé par le fait que l'unité de commande de charge (BL-ST) comporte un registre à décalage (RECCR) possédant un nombre prédéterminé d'étages (A à M), dont l'entrée de données reçoit la valeur "1" pour un sens de décalage et dont l'entrée de données reçoit la valeur "0" pour l'autre sens de décalage et une unité de commande (BDEC, IGEN, U51, U52, OR51, OR52) du registre à décalage, qui déduit le nombre associé d'impulsions de décalage $(CL_S)$ et le signal respectif de sens (" + " ou "-") de l'information de charge respectivement envoyée (BLIN), et qu'un étage de registre (par exemple K), qui correspond à la valeur de seuil prédéterminée, possède une sortie particulière de signal, qui fournit le signal de blocage (RECINH) en fonction du contenu de cet étage (K) du registre.

6. Montage suivant la revendication 4, caractérisé par le fait que l'unité de commande de charge (BS-ST) comporte un circuit additionneur/soustracteur binaire et un registre de sommes, dont la sortie est couplée par réaction à une entrée du circuit additionneur/soustracteur, tandis qu'à l'autre entrée est envoyé le nombre, déduit ce l'information respective de charge (BLIN), d'unités de charges conjointement avec un signal indiquant le sens de variation, et qu'une position, qui correspond à la valeur de seuil prédéterminée, du registre de sommes possède une sortie particulière de signal, qui fournit le signal de blocage (RECINH) en fonction du contenu de cette position du registre.

7. Montage suivant l'une des revendications 5 ou 6, caractérisé par le fait qu'aux sorties de plusieurs étages voisins de registres (par exemple H à L) est couplé un commutateur de sélection (MUX), au moyen duquel l'une des sorties (par exemple K) peut être sélectionnée en fonction d'une limite de charge prédéterminée (LG) pour la formation du signal de blocage (RECINH).

FIG 1

FIG 4

Z-PAR

| 0 | 7 | 8 | 11 | 12 | 15 | 16 | 17 | 19 | 20 | 31 |
|---|---|---|---|---|---|---|---|---|---|---|
| DEV-NR | | BUMA-CON | | ATU-CON | | | BLIN | | T-AD | |

EP 0 297 480 B1

FIG 2

# FIG 3

Z-BUS-ZYK

CLA

CLB

Z.SEL

Z.SEND

Z.CLDAT

M.REQ

ZBDAT — Z-PAR — DAT — DAT — DAT — DAT

# FIG 5

BLIN

EN

BDEC

+2 +1 -2 -1 0

CL

I GEN

"2" U52 &

"1" & U51

BL-ST

OR51 ≥1

≥1 OR52

RECCR

$CL_S$

REG-ST

+ -

"0" 0 0 0 0 0 1 1 1 1 1 1 1 "1"

M L K J H G C E D C B A

LG MUX

RECINH